# EUROPÄISCHE PATENTSCHRIFT

(11) **EP 1 757 472 B1**
(45) Veröffentlichungstag und Bekanntmachung des Hinweises auf die Patenterteilung: **08.10.2008**
(21) Anmeldenummer: 06450086.1
(22) Anmeldetag: 23.06.2006
(51) Int. Cl.: B60G 17/015, B60C 23/00

(54) **Verfahren zum Betrieb einer Einrichtung für eine Reifenfüllanlage für Kraftfahrzeuge**
Method for the operation of an arrangement for a tire inflation apparatus for motor vehicles
Procédé pour l'opération d'un arrangement pour un système de gonflage de pneus de véhicules automobiles

(30) Priorität: 25.08.2005 AT 13962005
(43) Veröffentlichungstag der Anmeldung: 28.02.2007
(73) Patentinhaber: Steyr-Daimler-Puch Spezialfahrzeug GmbH, 1111 Wien (AT)
(72) Erfinder: Skoff, Gerhard, 1230 Wien (AT)
(74) Vertreter: Rippel, Andreas

(56) Entgegenhaltungen:
- EP-A- 0 504 913
- EP-A1- 0 270 456
- EP-A1- 0 637 703
- EP-A2- 0 178 934
- WO-A-00/69662
- DE-A1- 3 720 787
- JP-A- 58 008 411
- JP-A- 60 185 612
- US-A- 3 957 128

## Beschreibung

Die vorgeschlagene Erfindung betrifft ein Verfahren zum Betrieb einer Einrichtung für eine Reifenfüllanlage für Kraftfahrzeuge, mit einer Sensorik, die fahrdynamische Zustände des Fahrzeuges sensiert, einer Steuerelektronik, die die Sensorsignale verarbeitet und die Druckluftversorgung und die pneumatische Ventile ansteuert, und einer Druckluftquelle mit zumindest einem Kompressor und zumindest einem Druckluftvorratsbehälter, um den Reifendruck hochdynamisch anheben und absenken zu können. Dokument WO-A-00/69662 zeigt ein Verfahren nach dem Oberbegriff des Anspruchs 1.

Wenn ein Fahrzeug durch eine Kurve fährt, greifen die Fliehkräfte am Schwerpunkt des Karosserieaufbaues an und verursachen eine Wankbeschleunigung und einen Wankwinkel des Aufbaus. Mit dem Wankwinkel der Karosserie stellt sich bei einer Einzelradaufhängung ein größerer positiver Sturz der Reifen ein, der die Aufstandsfläche des Reifens zur Fahrbahnoberfläche reduziert. Aufgrund der wirkenden Mechanismen der Gummireibung zwischen Reifen und Fahrbahn mit einem nicht linearen Zusammenhang zwischen Reifenaufstandskraft und übertragbarer Längs- und Querkraft sinkt dadurch das Potenzial zur Übertragung von Seitenführungskräften und damit der höchst erreichbaren Kurvengeschwindigkeiten. Außerdem werden Wankbeschleunigungen von Fahrzeuginsassen grundsätzlich als unangenehm empfunden.

Weiters kann es bei periodischen Anregungen des Fahrzeuges durch die Fahrbahn, zum Beispiel durch Betonstraßen mit konstantem Fugenabstand, zum sogenannten Motorstuckern kommen. Dies ist eine Resonanzerscheinung, bei der die sich aus Fahrgeschwindigkeit und Fugenabstand sich ergebende Erregerfrequenz nahe dem Maximum der Eigenfrequenz der Motorlagerung und des Fahrwerkes ergeben und die von den Passagieren als besonders unangenehm empfunden wird.

Dokumente EP-A-178 934, US-A-3 957 128 und EP-A-270 456 zeigen eine Beeinflüssung der Radaufhängung abhängig von Motorschwingungen.

Aus der WO 2004/089663 ist ein Verfahren zur Wankstabilisierung bekannt, wobei Wankbewegungen des Fahrzeugaufbaus von Sensoren erfasst und von einer elektronischen Regeleinheit ausgewertet werden. Die Elektronik aktiviert dabei einen Stabilisator, der die Wankbewegung dämpft. Ein derartiges Prinzip ist allgemein als Sky-Hook Regelung bekannt.

Aus der WO 2005/063514 ist ein Verfahren zur Wankstabilisierung bekannt, wobei Wankbewegungen des Fahrzeugaufbaus von Sensoren erfasst und von einer elektronischen Regeleinheit ausgewertet werden. Die Elektronik steuert die Dämpfungsrate des verstellbaren Stoßdämpfers und dämpft damit die Wankbewegung.

Analoge Systeme sind unter Anderem in der EP 0 949 999 B1, der WO 2005/007426 und der EP 1 391 330 A2 beschrieben.

Die DE 102 40 357 A1 beschreibt eine Luftfederungsanlage für ein Fahrzeug, wo für jedes Rad ein Luftfederbalg vorgesehen ist, wobei der Luftdruck in der Luftfeder über eine Leitung mit Ventilen für jede einzelne Luftfeder variiert werden kann.

Die WO 00/27659 beschreibt ein System zur dynamischen Regelung von Luftfedern, wobei der Luftdruck in den Luftfedern in Abhängigkeit vom Fahrzustand variiert wird, um für den jeweiligen Fahrzustand eine optimale Höhe einzustellen.

Die EP 1 336 515 A2 beschreibt ein Luftfedersystem, bei dem eine Schnittstelle zur Versorgung eines Reservereifens mit Druckluft vorgesehen ist.

Die Erfindung hat es sich zum Ziel gesetzt ein Verfahren der eingangs genannten Art zu schaffen, mittels der auf verhältnismäßig einfache Art der Komfort und die Sicherheit eines Kraftfahrzeuges erhöht werden kann. Erreicht wird dies dadurch, dass bei erkanntem Motorstuckern durch die Sensorik entsprechend einer Regellogik der Fülldruck der Reifen zumindest einer Achse um einen von der Regellogik vorgegebenen Betrag verändert wird.

Weitere vorteilhafte Merkmale der Erfindung sind in den Unteransprüchen gekennzeichnet.

Nachstehend ist die Erfindung anhand eines in den Zeichnungen dargestellten Ausführungsbeispieles näher beschrieben, ohne auf dieses Beispiel beschränkt zu sein. Dabei zeigt
Fig. 1 ein stark vereinfachtes Anlagenschema einer Einrichtung zur Durchführung des Verfahrens nach der Erfindung und
Fig. 2 stellt ebenfalls in schematischer Darstellung die Aufsicht auf ein mit einer erfindungsgemäßen Einrichtung ausgestattetes Fahrzeug dar.

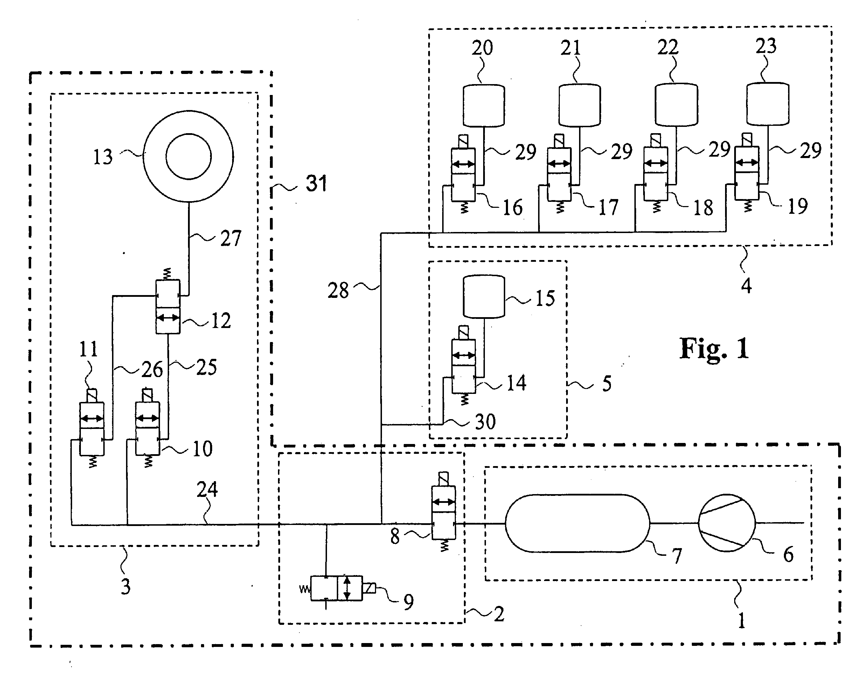

In Fig. 1 ist aus Übersichtlichkeitsgründen die Radeinheit 3 der Reifenfüllanlage 31 nur für ein Rad 13 dargestellt, grundsätzlich kann die Auslegung für eine beliebige Anzahl von Rädern 13 durch Hinzufügen jeweils eines pneumatisch gesteuerten Radventils 12 zu jedem Rad 13 und die Regelkreise durch Hinzufügen jeweils eines Steuerventils 10 und eines Füllventils 11 unter Hinzufügung der entsprechenden Pneumatikverrohrung 24, 25, 26 und 27 für jeden zusätzlichen Regelkreis erfolgen.

Ebenso ist das Luftfedersystem 4 beispielhaft mit vier Luftfederelementen dargestellt, ebenso kann jede beliebige andere Anzahl von Luftfederelementen zur Anwendung kommen.

Ebenso ist das pneumatisch verstellbare Motorlagersystem 5 nur mit einem pneumatisch verstellbaren Motorlager dargestellt, ebenso kann jede beliebige andere Anzahl von pneumatisch verstellbaren Motorlagern zur Anwendung kommen.

Dadurch, dass mit der Reifendruckregelanlage 31 das um mindestens eine Größenordnung höhere Arbeitsvolumen der Fahrzeugreifen 13 als das der Luftfedern 20, 21, 22 und 23 variiert werden muss, und dieser Vorgang zudem auch hochdynamisch erfolgen muss, indem die Reifendruckvariation der Beschleunigung des Fahrzeuges folgen können muss, ist für die Versorgung der Reifendruckregelanlage 31 ein um ein Vielfaches höheres Leistungsvermögen der Luftversorgung 1 als beim Luftfedersystem 4 erforderlich. Aufgrund dieser wesentlich höheren Leistungsfähigkeit der Luftversorgung 1 kann daher Luft in wirtschaftlicher Weise als Arbeitsmedium für die Aktuatorik der Komfortregelungssysteme des Fahrzeuges herangezogen werden.

Die Regelaktuatorik der Sky-Hook Regelung gemäß den im Stand der Technik beschriebenen Systemen wird üblicherweise mittels hydraulischer oder elektromechanischer Aktuatoren dargestellt. Die erfindungsgemäße Ausgestaltung einer derartigen Regelung ist in deutlich wirtschaftlicherer Form darstellbar, da die erforderlichen Komponenten bereits durch die Reifendruckregelung 31 und das Luftfedersystem 4 bereitgestellt sind. Die Luftversorgung 1 besteht aus zumindest einem Kompressor 6, dessen Leistungsfähigkeit für dynamische Regelvorgänge durch das Hinzufügen von zumindest einem Druckvorratsbehälter 7 wesentlich gesteigert werden kann. Bei Verwendung mehrerer Druckvorratsbehälter 7 kann auch ein unterschiedlicher Vorratsdruck in den einzelnen Behältern aufscheinen, um die unterschiedlichen Druckerfordernisse für die Reifenfüllanlage 3 und der Luftfederanlage 4 günstiger bedienen zu können. Der Ventilblock 2 zur Luftverteilung, bestehend aus dem Einlassventil 8 und dem Auslassventil 9, ist in gleicher Ausführung für die Reifenfüllanlage 3 und das Luftfedersystem 4 erforderlich. Die Druckluftversorgung 1 der Reifenfüllanlage 3 ist über pneumatische Leitungen 28 mit dem Luftfedersystem verbunden.

Erfindungsgemäß misst eine geeignete Sensorik, wie zum Beispiel in der WO 2005/063514 beschrieben, und die in der stark vereinfachten Fig. 1 nicht dargestellt ist, den Wankwinkel, die vertikale Aufbaubeschleunigungen und die Wankwinkelbeschleunigung des Fahrzeugaufbaus.

Wird eine periodische Vertikalschwingung, wie sie für das Motorstuckern typisch ist, von der Sensorik erfasst und von der Regellogik als solche erkannt, so wird die Luftversorgungseinheit 1 der Reifendruckregelanlage 31 aktiviert und der Luftdruck in allen Luftfederelementen 20, 21, 22 und 23 durch Öffnen der Luftfederventile 16, 17, 18 und 19 und wahlweise des Auslassventils 9 zur Druckabsenkung oder des Einlassventils 8 zur Druckerhöhung um einen bestimmten Betrag variiert. Durch diese Druckvariation wird die Eigenfrequenz der Radaufhängung und damit das Maximum der Eigenfrequenz des Fahrwerks und der Motorlagerung zu einer anderen Frequenz verschoben. Durch den größeren Abstand zwischen der Erregerfrequenz und dem Maximum der Eigenfrequenz wird das komfortbeeinträchtigende Motorstuckern deutlich verringert.

Dadurch, dass die Luftversorgung 1 der Reifendruckregelung 31 über die pneumatische Verbindungsleitung 28 mit dem Luftfedersystem 4 verbunden ist, kann, muss aber nicht, die eigene Luftversorgung der Luftfederanlage 4, wie in Fig. 1 dargestellt, entfallen, um das Gesamtsystem in wirtschaftlicher Form darstellen zu können.

Die Druckvariation der Luftfedern 20, 21, 22 und 23 zur Eigenfrequenzbeeinflussung kann zusätzlich unterstützt oder alternativ auch durch eine Reifendruckvariation erfolgen, wobei vorzugsweise dabei der Druck erhöht wird, um einen sicherheitskritischen Fahrzustand aufgrund eines zu geringen Reifendrucks zu verhindern. Dabei wird das Einlassventil 8, das Steuerventil 10 und das Füllventil 11 geöffnet, die Druckluft strömt über die Leitung 26, das durch das Steuerventil 10 geöffnete pneumatisch betätigte Radventil 12 und die Leitung 27 zu den Reifen 13.

In einer Ausführung können auch gleichzeitig einzelne oder mehrere Luftfederventile 16, 17, 18 und 19 mit den Reifenfüllanlagensteuer- 10 und Füllventilen 11 geöffnet werden, sodass die mit einem höheren Arbeitsdruck als der der Reifen 13 versehenen Luftfedern 20, 21, 22 und 23 direkt in den Reifen 13 entlüften und hier den Druck erhöhen.

Wenn das Fahrzeug mit einem pneumatisch verstellbaren Motorlagersystem 5 ausgestattet ist, kann ergänzend oder alternativ zu einer der vorher beschriebenen Lösungen der Luftdruck der pneumatischen Motorlager 15 in ähnlicher Weise wie bei der Luftfeder dazu verändert werden, um die Eigenfrequenz des Motorlagers 15 zu verändern und damit zusätzlich das Eigenfrequenzverhalten des Motorlager-Fahrwerkverbundes so zu beeinflussen, dass das Maximum der Eigenfrequenz einen noch größeren Abstand zur Erregerfrequenz bekommt. In Fig. 1 ist das Motorlagersystem 5 beispielhaft mit einem pneumatisch verstellbaren Lager dargestellt, prinzipiell können beliebig viele Lager durch Vervielfachung des Lagers 15 und des Ventils 14 angeordnet werden. Die pneumatische Verbindung zur Luftversorgung der Reifenfüllanlage erfolgt über die Leitung 30.

Wird nach diesem Regelvorgang die Fahrgeschwindigkeit des Fahrzeuges um einen vorgegebenen Betrag verändert, so wird der Solldruck in den Reifen 13, den Luftfedern 20, 21, 22 und 23 und den Motorlagerungen 15 wieder auf den optimalen fahrdynamischen Wert eingeregelt. Da das Arbeitsdruckniveau der einzelnen Elemente stark unterschiedlich ist, kann die Einstellung des neuen Solldruckes auch sequenziell nach einer beliebigen Prioritätenregelung erfolgen.

Ebenso kann nach dem Verstreichen einer vordefinierten Zeitperiode der ursprüngliche Luftdruckwert in den einzelnen Elementen wieder eingestellt werden oder beim Auftreten von anderen druckregelrelevanten Ereignissen für den Reifen 13 oder die Luftfedern 20, 21, 22 und 23 gemäß einer beliebig vorgegebenen Prioritätenregelung der ursprüngliche Druckzustand wieder hergestellt werden.

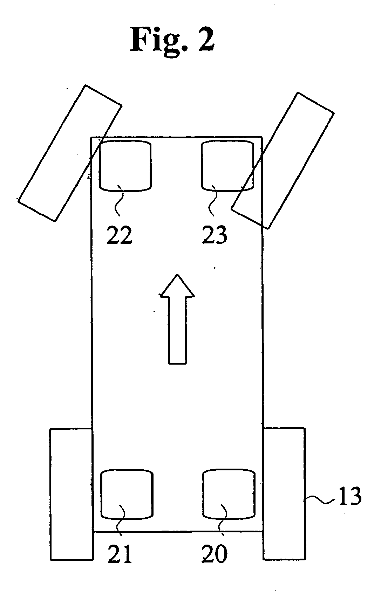

Ein derartiges prioritätsauslösendes Ereignis kann zum Beispiel eine Kurvenfahrt sein. Erkennt eine geeignete Sensorik eine entsprechende Wankwinkelbeschleunigung des Fahrzeugaufbaues, so kann erfindungsgemäß ergänzend oder alternativ zu einer entsprechenden Dämpferverhärtung gemäß dem oben beispielhaft zitierten Stand der Technik der Druck in den kurvenäußeren Luftfedern 21 und 22 gemäß Fig. 2 angehoben werden, um den nach außen wirkenden Aufbaukräften entgegenzuwirken. Die Druckregelung an den einzelnen Luftfedern erfolgt dabei gemäß einem Algorithmus, der vom Betrag und dem Vorzeichen der Wankwinkelbeschleunigung abhängig ist. Gemäß dem Regelalgorithmus kann dabei für jede Luftfeder 21 und 22 ein unterschiedlicher, zur Wankwinkelstabilisierung optimaler Druck eingestellt werden.

Bei Vorzeichenumkehr und/oder der Unterschreitung eines von der Regellogik vorgegebenen Grenzwertes der Wankwinkelbeschleunigung und/oder des Wankwinkels wird der Luftdruck in den zuvor zur Druckerhöhung angesteuerten Luftfederelementen entsprechend dem Algorithmus der Regellogik wieder auf den ursprünglichen Wert eingestellt, indem das Einlassventil 8 geschlossen und das Auslassventil 9 geöffnet wird. Danach werden die entsprechenden Luftfederventile 17 und 18 der kurvenäußeren Luftfedern solange geöffnet, bis der ursprüngliche Druck wieder eingestellt ist.

Alternativ zur Öffnung des Ablassventils 9 beim Ablassvorgang zur Einstellung des ursprünglichen Luftfederniveaus kann auch das Steuerventil 10 und das Füllventil 11 der Reifenfüllanlage 3 geöffnet werden, um die Druckreduktion in den Luftfederelementen zur Druckerhöhung in den Reifen 13 zu verwenden. Dies kann eine sinnvolle Kombination sein, wenn zum Beispiel am Kurvenausgang das Fahrzeug so beschleunigt wird, dass gemäß der Regelstrategie der Reifenfüllanlage 3 ein höherer Druck eingeregelt werden soll, und gleichzeitig die Regellogik des Luftfedersystems 4 ein tieferes Niveau aufgrund der erhöhten Geschwindigkeit vorgibt.

## Patentansprüche

1. Verfahren zum Betrieb einer Einrichtung für eine Reifenfüllanlage für Kraftfahrzeuge, mit einer Sensorik, die fahrdynamische Zustände des Fahrzeuges sensiert, einer Steuerelektronik, welche die Sensorsignale verarbeitet und die Druckluftversorgung (1) und die pneumatische Ventile ansteuert, und einer Druckluftquelle mit zumindest einem Kompressor und zumindest einem Druckluftvorratsbehälter, um den Reifendruck dynamisch anheben und absenken zu können, **dadurch gekennzeichnet, dass** bei erkanntem Motorstuckern durch die Sensorik entsprechend einer Regellogik der Fülldruck der Reifen (13) zumindest einer Achse um einen von der Regellogik vorgegebenen Betrag verändert wird.

2. Verfahren nach Anspruch 1 bei einer Einrichtung, bei der die Druckluftversorgung (1) der Reifenfüllanlage (3) mittels pneumatischer Leitungen (28) mit einem Luftfedersystem (4) verbunden ist, **dadurch gekennzeichnet, dass** bei erkanntem Motorstuckern durch die Sensorik entsprechend einer Regellogik der Fülldruck der Luftfedern (20, 21, 22, 23) zumindest einer Achse um einen von der Regellogik vorgegebenen Betrag verändert wird.

3. Verfahren nach Anspruch 2, **dadurch gekennzeichnet, dass** der von der Regellogik vorgegebene Betrag der Druckänderung in den Reifen (13) und in den Luftfedern (20, 21, 22, 23) ein unterschiedlicher ist.

4. Verfahren nach Anspruch 1, 2 oder 3 bei einer Einrichtung, bei der die Druckluftversorgung (1) der Reifenfüllanlage (3) mittels pneumatischer Leitungen und schaltbaren Ventilen mit einer pneumatischen Motorlagerung verbunden ist, **dadurch gekennzeichnet, dass** bei erkanntem Motorstuckern durch die Sensorik entsprechend einer Regellogik zusätzlich oder alternativ zur Druckluftänderung in den Reifen (13) und/oder den Luftfedern (20, 21, 22, 23) der Luftdruck in zumindest einem als pneumatisches Lager ausgebildeten Motorlager(5) um einen von der Regellogik vorgegebenen Betrag verändert wird.

5. Verfahren nach einem der Ansprüche 1 bis 4, **dadurch gekennzeichnet, dass** nach dem Verstreichen einer in der Regellogik vordefinierten Zeitperiode der ursprüngliche Druckzustand im Reifen (13) und/oder in den Luftfedern (20, 21, 22, 23) und/oder der Motorlagerung (5) wieder eingestellt wird.

6. Verfahren nach einem der Ansprüche 1 bis 5, **dadurch gekennzeichnet, dass** beim Auftreten von anderen druckregelrelevanten Ereignissen als das Motorstuckern für den Reifen (13) und/oder die Luftfeder (20, 21, 22, 23) und/oder der pneumatischen Motorlagerung (5) gemäß einer beliebig vorgegebenen Prioritätenregelung der ursprüngliche Druckzustand im Reifen (13) und/oder in der Luftfeder (20, 21, 22, 23) und/oder der Motorlagerung (5) wieder hergestellt wird.

## Claims

1. A method for operating a device for a tyre inflation system for motor vehicles, having a sensor system which detects the dynamic conditions of the vehicle, an electronic controller which processes the sensor signals and controls the compressed air supply (1) and pneumatic valves, and a compressed air source having at least one compressor and at least one compressed air storage vessel, to dynamically increase and decrease the tyre pressure, **characterized in that** when the sensor system detects stutter in accordance with a control logic, the pressure filling the tyres (13) of at least one axle is varied by an amount which is preset by the control logic.

2. The method according to claim 1, for a device in which the compressed air supply (1) of the tyre inflation system (3) is connected to a pneumatic spring system (4) via pneumatic lines (28), **characterized in that** when the sensor system detects stutter in accordance with a control logic, the pressure filling the pneumatic springs (20, 21, 22, 23) of at least one axle is varied by an amount which is preset by the control logic.

3. The method according to claim 2, **characterized in that** the preset pressure variation in the tyres (13) differs from that in the pneumatic springs (20, 21, 22, 23).

4. The method according to claim 1, 2 or 3, for a device in which the compressed air supply (1) of the tyre inflation system (3) is connected to a pneumatic engine mounting via pneumatic lines and switchable valves, **characterized in that** when the sensor system detects stutter in accordance with a control logic, in addition to or as an alternative to varying the compressed air pressure in the tyres (13) and/or in the pneumatic springs (20, 21, 22, 23), the air pressure in at least one of the engine mountings (5) constituted by a pneumatic mounting is varied by an amount which is preset by the control logic.

5. The method according to one of claims 1 to 4, **characterized in that** after a time interval which has been defined by the control logic has elapsed, the original pressure conditions in the tyres (13) and/or in the pneumatic springs (20, 21, 22, 23) and/or in the engine mounting (5) is re-established.

6. The method according to one of claims 1 to 5, **characterized in that** when the tyres (13) and/or the pneumatic springs (20, 21, 22, 23) and/or the pneumatic engine mounting (5) are affected by events of relevance to pressure control other than stutter, the original pressure conditions in the tyres (13) and/or in the pneumatic springs (20, 21, 22, 23) and/or the pneumatic engine mounting (5) are re-established in accordance with any given order of priority.

## Revendications

1. Procédé pour le fonctionnement d'un dispositif destiné à un système de remplissage de pneu pour véhicules automobiles, avec un système de détection permettant de capter des états de conduite dynamique du véhicule, une électronique de commande permettant de traiter les signaux de détection et d'activer l'alimentation en air comprimé (1) ainsi que les soupapes pneumatiques, et une source d'air comprimé avec au moins un compresseur et au moins un récipient de réserve d'air comprimé, pour pouvoir augmenter et diminuer la pression des pneus de manière dynamique, **caractérisé en ce que** lors d'un bégaiement de moteur reconnu par le système de détection en fonction d'une logique de réglage, la pression de remplissage des pneus (13) d'au moins un essieu est modifiée d'une quantité prédéfinie par la logique de réglage.

2. Procédé selon la revendication 1, pour une installation dans laquelle l'alimentation en air comprimé (1) du système de remplissage de pneus (3) au moyen de conduites pneumatiques (28) est reliée à un système de ressorts pneumatiques (4), **caractérisé en ce que** lors d'un bégaiement de moteur reconnu par le système de détection en fonction d'une logique de réglage, la pression de remplissage des ressorts pneumatiques (20, 21, 22, 23) d'au moins un essieu est modifiée d'une quantité prédéfinie par la logique de réglage.

3. Procédé selon la revendication 2, **caractérisé en ce que** la quantité prédéfinie par la logique de réglage est différente pour la modification de pression dans les pneus (13) et celle dans les ressorts pneumatiques (20, 21, 22, 23).

4. Procédé selon l'une des revendications 1, 2 ou 3, pour une installation dans laquelle l'alimentation en air comprimé (1) du système de remplissage de pneus (3) au moyen de conduites pneumatiques et de soupapes actionnables est relié à un support moteur pneumatique, **caractérisé en ce que** lors d'un bégaiement de moteur reconnu par le système de détection en fonction d'une logique de réglage, la pression dans au moins un support moteur (5) conçu comme un support pneumatique est modifiée d'une quantité prédéfinie par la logique de réglage, en complément ou en remplacement de la modification d'air comprimé dans les pneus (13) et/ou les ressorts pneumatiques (20, 21, 22, 23).

5. Procédé selon l'une des revendications 1 à 4, **caractérisé en ce qu'**après l'écoulement d'une période de temps prédéfinie par la logique de réglage, l'état de pression initial dans le pneu (13) et/ou dans les ressorts pneumatiques (20, 21, 22, 23) et/ou dans le support moteur (5) est à nouveau réglé.

6. Procédé selon l'une des revendications 1 à 5, **caractérisé en ce que** lors de l'apparition d'évènements relatifs au réglage de pression, autres que le bégaiement de moteur, concernant les pneus (13) et/ou les ressorts pneumatiques (20, 21, 22, 23) et/ou le support moteur pneumatique (5) selon une définition de priorités prédéfinie au choix, l'état de pression initial dans les pneus (13) et/ou dans les ressorts pneumatiques (20, 21, 22, 23) et/ou dans le support moteur (5) est à nouveau établi.
